# EUROPÄISCHE PATENTSCHRIFT

(11) **EP 1 841 289 B1**
(45) Veröffentlichungstag und Bekanntmachung des Hinweises auf die Patenterteilung: **13.04.2016**
(21) Anmeldenummer: 07003087.9
(22) Anmeldetag: 14.02.2007
(51) Int. Cl.: H05B 6/12

(54) **Vorrichtung zum Zubereiten und/oder Warmhalten von Gargut**
Device for preparing and/or keeping warm cooked foods
Dispositif destiné à préparer et/ou maintenir au chaud des produits de cuisson

(30) Priorität: 29.03.2006 DE 102006014818
(43) Veröffentlichungstag der Anmeldung: 03.10.2007
(73) Patentinhaber: Electrolux Home Products Corporation N.V., 1130 Brussels (BE)
(72) Erfinder: Svensson, Mats, 23175 Beddingestrand (SE); Toschi, Tiziano, 40135 Bologna (IT); Kümmel, Egon, 91189 Rohr (DE); Jeanneteau, Laurent, 60200 Compiègne (FR)
(74) Vertreter: Baumgartl, Gerhard Willi

(56) Entgegenhaltungen:
- EP-A- 0 883 327
- DE-A1- 19 729 661
- DE-T2- 69 911 921
- FR-A- 2 527 916
- US-A1- 2005 045 624

## Beschreibung

Die Erfindung betrifft eine Vorrichtung zum Zubereiten und/oder Warmhalten von Gargut gemäß dem Oberbegriff des Patentanspruches 1.

Bei Induktionsöfen weisen die Garbehälter ein Heizelement aus einem ferromagnetischen Material auf. Der Induktionsofen erzeugt ein magnetisches Wechselfeld, durch das sich insbesondere das ferromagnetische Material erwärmt. Das ferromagnetische Material wird bei dem Erreichen der Curie-Temperatur paramagnetisch, so dass die Curie-Temperatur die maximal erreichbare Temperatur des Heizelementes ist. Die Curie-Temperatur hängt von der Zusammensetzung der Legierung des ferromagnetischen Materials ab. Es können beliebige Curie-Temperaturen bis etwa 230°C durch die Auswahl der Legierung festgelegt werden. Bei Garbehältern für Induktionsöfen kann diese Eigenschaft ausgenutzt werden, indem die Curie-Temperatur an die Zubereitungstemperatur bzw. Warmhaltetemperatur des jeweiligen Garguts angepasst wird. Es wird automatisch die vorbestimmte Gartemperatur, die von der Curie-Temperatur des Garbehälters abhängt, eingestellt. Es ist somit nicht erforderlich, dass der Benutzer die Temperatur oder die Wärmezufuhr am Induktionsofen manuell einstellt oder korrigiert.

Bei leeren Garbehältern oder bei Garbehältern mit nur wenig Gargut ist es dagegen schwierig, eine niedrige OberflächenTemperatur im Garbehälter zu erreichen. Dies lässt sich beispielsweise mit einem Kochfeld aus Ceran-Glas erreichen. Das Kochfeld aus Ceran-Glas ist jedoch kostenintensiv und die Gestaltungsmöglichkeiten hinsichtlich Form, Design und Farbe sind begrenzt.

In der DE 197 29 661 A1 ist ein Erwärmungssystem mit einem ferromagnetischen Einsatzelement für ein Kochgefäß beschrieben, das den Curie-Effekt nutzt. Das ferromagnetische Einsatzelement kann im Boden des Kochgefäßes integriert sein. Eine Spule sendet induktive Felder aus, die zur Erwärmung des Einsatzelements und damit des Kochgefäßes dienen. Bei Erreichen der Curie-Temperatur lässt die Magnetisierbarkeit des ferromagnetischen Einsatzelements stark nach. Dies wird von Sensoren erkannt, so dass die Spule abgeschaltet wird.

Aus der US 3,979,572 A ist ein Kochgefäß für Induktionssysteme mit einem ferromagnetische Einsatzelement bekannt.

Es ist Aufgabe der Erfindung, eine Vorrichtung zum Zubereiten und/oder Warmhalten von Gargut bereit zu stellen, bei der im Garbehälter die Temperatur zuverlässig einstellbar ist, wobei der Garbehältern kostengünstig herstellbar ist.

Diese Aufgabe wird durch den Gegenstand des Patentanspruches 1 gelöst.

Gemäß der Erfindung ist vorgesehen, dass
- das Heizelement eine weitere Schicht aus Edelstahl umfasst, die oberhalb der Schicht aus dem wärmeleitenden Material angeordnet ist,
- die Schicht aus dem wärmeleitenden Material oberhalb der Schicht aus dem ferromagnetischen Material angeordnet ist,
- die Schicht aus dem wärmeleitenden Material eine Dicke von wenigstens 0,5 mm aufweist,
- die Schicht aus dem ferromagnetischen Material eine Dicke von 0,3 mm bis 0,9 mm aufweist,
- der Garbehälter aus einem thermoplastischen Material hergestellt ist und die maximale Curie-Temperatur des Heizelements zwischen 30°C und 300°C beträgt, und
- zwischen dem ferromagnetischen Material und der Oberseite der Induktionsheizeinrichtung eine Luftschicht vorgesehen ist, die eine Dicke von 1 mm bis 3 mm aufweist.

Durch die Verkleidung der ferromagnetischen Heizelemente wird die automatische Regelung verbessert. Die Verkleidung beeinflusst den Wärmestrom, der von den Heizelementen abgeführt wird. Wenn sich kein oder nur wenig Gargut im Garbehälter befindet, wird vom Heizelement über die Verkleidung zum Gargut entsprechend weniger Wärme abgeführt. Dadurch enthält das Heizelement mehr Wärme und die Temperatur ist entsprechend höher. Bei Erreichen der Curie-Temperatur wird die Wärmeerzeugung im Heizelement unterbrochen. Nach dem Abkühlen des Garbehälters wird die wärmeerzeugung im Heizelement fortgesetzt, sobald die Curie-Temperatur wieder unterschritten wird. Die vollständige Temperaturregelung findet somit im Garbehälter statt.

Vorzugsweise ist die Verkleidung aus Kunststoff hergestellt. Bei Kunststoff handelt es sich um ein kostengünstiges Material, das für Lebensmittel und Gargut geeignet ist.

Weiterhin kann die Verkleidung aus Silikon hergestellt sein. Das Silikon kann auch hohen Temperaturen ausgesetzt werden, so dass der Garbehälter auch zum Braten oder Grillen verwendet werden kann.

Außerdem kann die Verkleidung aus den Materialien Kunststoff, Silikon und/oder Holz zusammengesetzt sein. Insbesondere ist die Verkleidung aus Kunststoff oder Silikon mit hoher Temperaturstabilität hergestellt.

Vorzugsweise umfasst die Oberseite der Induktionsheizeinrichtung eine Abdeckung, die einen Teil der Verkleidung bildet. Somit befindet sich die Abdeckung zwischen der Induktionsheizeinrichtung und dem Heizelement. Das Material und die Geometrie der Abdeckung haben Auswirkungen auf den Wärmestrom, so dass auch durch die Auswahl der Abdeckung das thermische Verhalten der Vorrichtung beeinflusst werden kann. Durch die Dicke der Abdeckung kann insbesondere der Abstand zwischen der Induktionsheizeinrichtung und dem Heizelement beeinflusst werden.

Beispielsweise ist die Abdeckung aus Holz hergestellt. Dies erhöht die Anzahl der Möglichkeiten zur Ausgestaltung der Vorrichtung.

Gemäß der Erfindung umfasst der Garbehälter im Boden ein Heizelement, das eine Schicht aus einem ferromagnetischen Material und eine weitere Schicht aus einem wärmeleitenden Material aufweist. Dabei ist die Schicht aus dem wärmeleitenden Material insbesondere oberhalb der Schicht aus dem ferromagnetischen Material angeordnet. Als wärmeleitendes Material kann beispielsweise Aluminium vorgesehen sein.

Beispielsweise weist die Schicht aus dem wärmeleitenden Material eine Dicke von 0,5 mm bis 11 mm und die Schicht aus dem ferromagnetischen Material eine Dicke von 0,3 mm bis 0,9 mm, vorzugsweise 0,6 mm auf. Da das ferromagnetische Material sehr kostenintensiv ist, lässt sich mit den vorgenannten Schichtdicken eine relativ kostengünstige Ausführungsform bereitstellen.

Gemäß der Erfindung umfasst das Heizelement eine weitere Schicht aus Edelstahl. Der Edelstahl ist ein besonders gut für Lebensmittel geeignet.

Gemäß der Erfindung ist die Schicht aus Edelstahl oberhalb der Schicht aus dem wärmeleitenden Material und die Schicht aus dem wärmeleitenden Material oberhalb der Schicht aus dem ferromagnetischen Material angeordnet.

Gemäß der Erfindung weist die Schicht aus dem wärmeleitenden Material eine Dicke von wenigstens 0,5 mm und die Schicht aus dem ferromagnetischen Material eine Dicke von 0,3 mm bis 0,9 mm, vorzugsweise 0,6 mm auf.

Gemäß der Erfindung ist der Garbehälter aus einem thermoplastischen Material hergestellt und die maximale Curie-Temperatur des Heizelements beträgt zwischen 30°C und 300°C. Da die kritische Temperatur des thermoplastischen Materials stets oberhalb der Curie-Temperatur liegt, ist ein Schmelzen oder gar Brennen des Garbehälters nicht möglich.

Zweckmäßigerweise beträgt der maximale Abstand zwischen dem ferromagnetischen Material und der Oberseite der Induktionsheizeinrichtung zwischen 1 mm und 7 mm.

Beispielsweise ist zwischen dem ferromagnetischen Material und der Oberseite der Induktionsheizeinrichtung eine Isolierschicht aus Kunststoff vorsehen. Vorzugsweise weist die Isolierschicht eine Dicke von 1 mm bis 7 mm auf.

Gemäß der Erfindung ist zwischen dem ferromagnetischen Material und der Oberseite der Induktionsheizeinrichtung eine Luftschicht vorsehen, die eine Dicke von 1 mm bis 3 mm aufweist.

Beispielsweise ist die Luftschicht oder der Luftspalt mit einem Fasermaterial gefüllt.

Weiterhin kann die Luftschicht Abstandselemente aus Silikon aufweisen. Dadurch werden der Luftspalt und der Garbehälter stabilisiert.

Bei einer speziellen Ausführungsform weist die Vorrichtung wenigstens ein Oberteil auf, das oberhalb der Induktionsheizeinrichtung angebracht oder anbringbar ist. In das Oberteil sind insbesondere die Garbehälter eingesetzt oder einsetzbar.

Weiterhin ist vorgesehen, dass der bzw. die Garbehälter wenigstens eine Identifizierungseinrichtung aufweisen, die von der Induktionsheizeinrichtung erkennbar ist. Auf diese Weise sind diejenigen Garbehälter erkennbar, die zur Induktionsheizeinrichtung gehören. Damit lässt sich verhindern, dass falsche Garbehälter verwendet werden, die möglicherweise nicht für die Induktionsheizeinrichtung geeignet sind.

Vorzugsweise ist die Identifizierungseinrichtung drahtlos mit der Induktionsheizeinrichtung gekoppelt. Dies ermöglicht eine unkomplizierte Bedienung.

Schließlich betrifft die Erfindung einen Garbehälter zum Zubereiten und/oder Warmhalten von Gargut, der für die oben beschriebene Induktionsheizeinrichtung vorgesehen ist.

Weitere Merkmale, Vorteile und besondere Ausführungsformen der Erfindung sind Gegenstand der Unteransprüche.

Die Vorrichtung zum Zubereiten und/oder Warmhalten von Gargut gemäß der Erfindung wird nachstehend am Beispiel einer bevorzugten Ausführungsform und unter Bezugnahme auf die beigefügte Zeichnung näher erläutert. Es zeigt:
- FIG. 1: eine schematische Vorderansicht einer ersten Ausführungsform einer Vorrichtung gemäß der Erfindung,
- FIG. 2: eine schematische Vorderansicht einer zweiten Ausführungsform einer Vorrichtung gemäß der Erfindung, und
- FIG. 3: eine schematische Schnittansicht einer beispielhaften Ausführungsform eines Garbehälter der Vorrichtung gemäß der Erfindung.

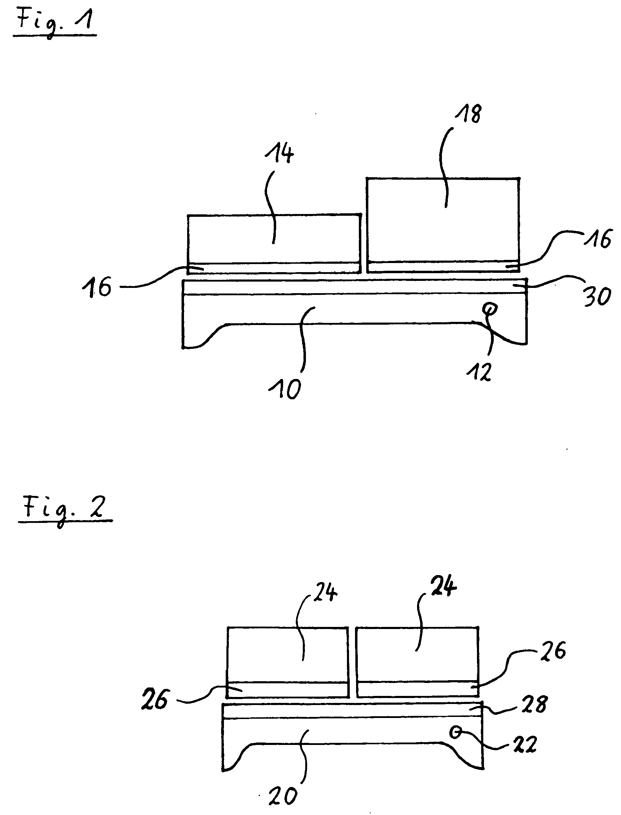

In FIG. 1 ist eine erste Ausführungsform der erfindungsgemäßen Vorrichtung zum Zubereiten und/oder Warmhalten von Gargut als eine schematische Vorderansicht dargestellt. Die Vorrichtung umfasst eine Induktionsheizeinrichtung 10 mit einem Schalter 12.

Die Induktionsheizeinrichtung 10 bildet den Sockel oder die Basis der Vorrichtung. Die Induktionsheizeinrichtung 10 ist etwa quaderförmig ausgebildet und weist ein Kunststoffgehäuse auf. Im Inneren der Induktionsheizeinrichtung 10 befindet sich wenigstens eine Induktionsspule. Weiterhin befindet sich in der Induktionsheizeinrichtung 10 wenigstens ein Wechselstromgenerator. Der Wechselstromgenerator ist mit der Induktionsspule gekoppelt. Bei dieser konkreten Ausführungsform sind zwei Induktionsspulen vorgesehen, die in der linken bzw. rechten Hälfte der Induktionsheizeinrichtung 10 angeordnet und unabhängig voneinander ansteuerbar sind. An der Oberseite der Induktionsheizeinrichtung 10 befindet sich eine Abdeckung 30, die bei dieser konkreten Ausführungsform aus Holz hergestellt ist.

Der Wechselstromgenerator erzeugt einen Wechselstrom mit einer Grundfrequenz von etwa 20 kHz bis zu etwa 80 kHz. Außerdem werden vom Wechselstromgenerator auch Oberfrequenzen erzeugt, die bis zu 10 MHz betragen können. Der Wechselstrom fließt durch die Induktionsspule, so dass ein magnetisches Wechselfeld mit den vorgenannten Frequenzen erzeugt wird. Vorzugsweise sind Abschirmeinrichtungen vorgesehen, um unerwünschte Störungen zu vermeiden, die insbesondere aufgrund der hohen Frequenzen verursacht werden.

Auf der Induktionsheizeinrichtung 10 sind mehrere Garbehälter 14 und 18 angeordnet. Die Anzahl der aufsetzbaren Garbehälter 14 und 18 hängt von deren Abmessungen ab. Die Garbehälter 14 und 18 sind aus Kunststoff, vorzugsweise aus einem thermoplastischen Kunststoff hergestellt. Die Garbehälter 14 und 18 weisen im Bodenbereich jeweils ein oder mehrere Heizelemente 16 auf. Der Garbehälter 18 ist höher als der Garbehälter 14 ausgebildet. Die Heizelemente 16 sind aus einem ferromagnetischen Material hergestellt. Für jedes Heizelement 16 ist die Curie-Temperatur des ferromagnetischen Materials individuell festgelegt.

Durch das Einschalten der Induktionsheizeinrichtung 10 wird ein magnetisches Wechselfeld aufgebaut, durch das die ferromagnetischen Heizelemente 16 erwärmt werden. Dabei wird das Heizelement 16 bis zum Erreichen seiner jeweiligen Curie-Temperatur erwärmt. Beim Erreichen der Curie-Temperatur wird das ursprünglich ferromagnetische Material des Heizelements 16 paramagnetisch und das Heizelement 16 wird nicht weiter erwärmt. Nach dem Abkühlen wird das Material des Heizelements 16 wieder ferromagnetisch und bis zum Erreichen der Curie-Temperatur wieder erwärmt. Wenn die Induktionsheizeinrichtung 10 ausreichend Energie liefert, wird jedes Heizelement 16 auf seine jeweilige Curie-Temperatur erwärmt. Somit ist jeder Garbehälter 14 für eine vorbestimmte Gartemperatur vorgesehen.

Die Curie-Temperaturen für die einzelnen Garbehälter 14 werden für ein bestimmtes Gargut oder für eine bestimmte Zubereitungsart ausgewählt. Ein Garbehälter 14, der zum Kochen von Suppen vorgesehen ist, enthält Heizelemente 16 mit einer Curie-Temperatur von etwa 120°C. Ein Garbehälter 14 zum langsamen Kochen hat Heizelemente 16 mit einer Curie-Temperatur von etwa 160°C. Bei einem Garbehälter 14, der zum Grillen vorgesehen ist, hat das Material der Heizelemente 16 eine Curie-Temperatur von beispielsweise etwa 220°C. Bei einem Garbehälter 14, der zum Warmhalten vorgesehen ist, beträgt die Curie-Temperatur für das Material der Heizelemente 16 etwa 80°C. Es können mehrere Garbehälter 14 mit unterschiedlichen Curie-Temperaturen im Oberteil 12 eingesetzt werden. Die Vorrichtung ermöglicht das gleichzeitige automatische Zubereiten unterschiedlicher Speisen bei verschiedenen Temperaturen mit einer einzigen Induktionsheizeinrichtung 10.

Die Standardausführung der erfindungsgemäßen Heizelemente 16 umfasst eine Basisschicht aus einem ferromagnetischen Material mit einer Schichtdicke von vorzugsweise etwa 0,6 mm sowie eine Zwischenschicht aus Aluminium mit einer Schichtdicke von vorzugsweise etwa 1 mm. Die Zwischenschicht ist der Garfläche zugewandt und wirkt als Diffusionsschicht.

Die Spezialausführung der erfindungsgemäßen Heizelemente 16 umfasst ebenfalls die Basisschicht aus einem ferromagnetischen Material mit einer Schichtdicke von vorzugsweise etwa 0,6 mm sowie die Zwischenschicht aus Aluminium mit einer Schichtdicke von vorzugsweise etwa 1 mm. Weiterhin ist eine Schicht aus Edelstahl vorgesehen, die der Garfläche zugewandt ist. Bei der Herstellung werden diese drei Schichten zunächst übereinander angeordnet, anschließend in das Ausgangsmaterial gelegt und schließlich gepresst.

Die äußere Umhüllung des Garbehälters 14, dessen Bodentemperatur 120°C nicht überschreitet, ist aus einem thermoplastischen Material hergestellt. Der maximale Abstand zwischen dem ferromagnetischen Material und der Oberseite der Induktionsheizeinrichtung 10 beträgt zwischen 5 mm und 7 mm. In diesem Zwischenraum befinden sich das Kunststoffmaterial des Garbehälters 14 sowie ein Luftspalt. Der Luftspalt kann mit einem Fasermaterial gefüllt sein und/oder Abstandselemente aus Silikon aufweisen. Die Dicke des Kunststoffmaterials an der Unterseite des Garbehälters 14 beträgt vorzugsweise etwa 2 mm. Der Luftspalt hat eine Dicke von etwa 4 mm. Die Wärme wird vom Boden des Garbehälters 14 auf das Gargut übertragen und verteilt sich innerhalb des Garguts. Weiterhin wird die wärme über das Gargut auf die Seitenwände des Garbehälters 14 übertragen.

Auch die Abdeckung 30 der Induktionsheizeinrichtung 10 bildet einen Teil der Verkleidung der Heizelemente 16. Das Material und die Geometrie haben Auswirkungen auf den Wärmestrom. Außerdem lässt sich durch die Dicke der Abdeckung 30 der Abstand zwischen der Induktionsspule und den Heizelementen 16 beeinflussen.

Die Umhüllung des Garbehälters 14, der für Grillgut vorgesehen ist, ist aus Silikon hergestellt.

Der einzige Schalter 12 ist ausreichend und ausschließlich zum Ein- und Ausschalten der Induktionsheizeinrichtung 10 vorgesehen, da durch die Heizelemente 16 die Temperatur automatisch eingestellt wird.

Die Vorrichtung kann auch zum Warmhalten der Speisen während der Mahlzeit verwendet werden.

In FIG. 2 ist eine zweite Ausführungsform der erfindungsgemäßen Vorrichtung zum Zubereiten und/oder Warmhalten von Gargut als eine schematische Vorderansicht dargestellt. Die Vorrichtung umfasst eine Induktionsheizeinrichtung 20 mit einer Abdeckung 28 und einem einzigen Schalter 22.

Die Induktionsheizeinrichtung 20 bildet auch bei der zweiten Ausführungsform den Sockel der Vorrichtung. Die Induktionsheizeinrichtung 20 ist etwa quaderförmig ausgebildet und umfasst ein Kunststoffgehäuse. Im Inneren der Induktionsheizeinrichtung 20 befinden sich eine oder mehrere Induktionsspulen. Weiterhin ist in der Induktionsheizeinrichtung 20 wenigstens ein Wechselstromgenerator vorgesehen, der mit der Induktionsspule gekoppelt ist. Die Induktionsheizeinrichtung 20 funktioniert im Prinzip ebenso wie die Induktionsheizeinrichtung 10 der ersten Ausführungsform.

Auf der Induktionsheizeinrichtung 20 sind mehrere Garbehälter 24 mit Heizelementen 26 angeordnet. Die Anzahl der aufsetzbaren Garbehälter 24 hängt von deren Abmessungen ab. Beim Garvorgang werden die idealen Abstände zwischen der Induktionsheizeinrichtung 20 und den Heizelementen 26 in den Garbehältern 24 erreicht.

Auch bei dieser Ausführungsform ist der einzige Schalter 12 ausreichend und ausschließlich zum Ein- und Ausschalten der Induktionsheizeinrichtung 20 vorgesehen, da durch die Heizelemente 26 die Temperatur automatisch eingestellt wird.

Die Vorrichtung kann beispielweise als mobiles Gargerät verwendet werden. Weiterhin kann die Vorrichtung zum Transportieren von fertig zubereiteten Speisen verwendet werden.

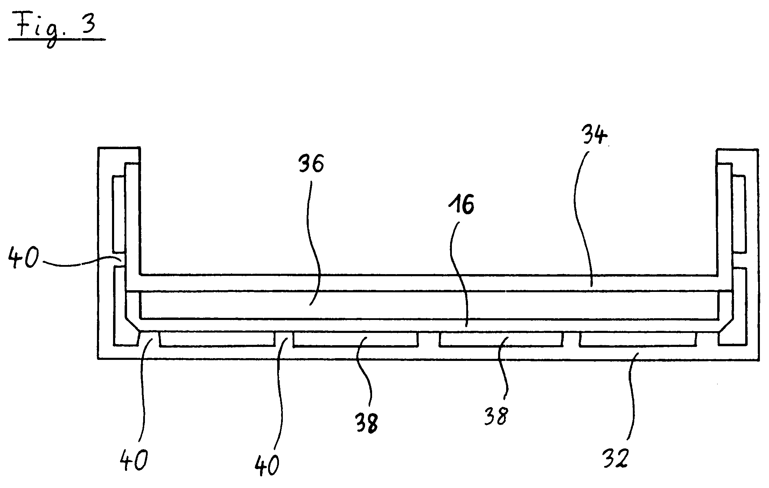

In FIG. 3 ist eine schematische Schnittansicht einer beispielhaften Ausführungsform der Garbehälter 14 und 18 dargestellt. Der Garbehälter umfasst ein Außenteil 32 und ein Innenteil 34. Sowohl das Außenteil 32 als auch das Innenteil 34 sind wannenförmig ausgebildet. Das Innenteil 34 befindet sich innerhalb des Außenteils 32. Im Boden des Garbehälters sind das Heizelement 16 und eine wärmeleitende Schicht 36 angeordnet. Die wärmeleitende Schicht 36 befindet sich unmittelbar oberhalb des Heizelements 16 und direkt unterhalb des Innenteils 34. Zwischen dem Heizelement 16 und dem Außenteil 32 befindet sich eine Luftschicht 38. Das Heizelement 16 ist mittels mehrerer Abstandselemente 40 am Außenteil 32 abgestützt. Die Abstandselemente 40 sind beispielsweise aus Silikon hergestellt. Durch die Auswahl des ferromagnetischen Materials des Heizelements 16 ist die Verwendungsart des Garbehälters 14 vorgegeben. Die Curie-Temperatur des ferromagnetischen Materials entspricht etwa der Zubereitungs- bzw. Warmhaltetemperatur des Garguts.

Bei der erfindungsgemäßen Vorrichtung sind die Induktionsheizeinrichtung 10 und die Garbehälter 14 und 18 so aufeinander abgestimmt, dass die gewünschte automatische Regelung erreicht wird. Werden dagegen solche Garbehälter verwendet, die nicht für die Vorrichtung vorgesehen sind, können Komplikationen auftreten. Beispielsweise kann der Garbehälter schmelzen oder sogar verbrennen.

Um dem vorzubeugen ist eine Identifizierungseinrichtung vorgesehen, um diejenigen Garbehälter zu erkennen, die nicht zur erfindungsgemäßen Vorrichtung gehören, Als Identifizierungseinrichtung kann ein sogenannter "TAG" verwendet werden, der im Garbehälter integriert ist und bestimmte drahtlose Signale aussendet. Bleiben diese Signale aus, dann wird beispielsweise die Induktionsheizeinrichtung 10 gesperrt. Dies wäre dann der Fall, wenn sich auf der Induktionsheizeinrichtung 10 ein solcher Garbehälter befindet, der nicht zur Vorrichtung gehört oder nicht für die Vorrichtung vorgesehen ist. Dabei wird die Induktionsheizeinrichtung 10 auch dann gesperrt, wenn sich überhaupt kein Garbehälter auf der Induktionsheizeinrichtung 10 befindet.

### Bezugszeichenliste

- 10: Induktionsheizeinrichtung
- 12: Schalter
- 14: Garbehälter
- 16: Heizelement
- 18: Garbehälter
- 20: Induktionsheizeinrichtung
- 22: Schalter
- 24: Garbehälter
- 26: Heizelement
- 28: Abdeckung
- 30: Abdeckung
- 32: Außenteil
- 34: Innenteil
- 36: wärmeleitende Schicht
- 38: Luftschicht
- 40: Abstandselement

## Patentansprüche

1. Vorrichtung zum Zubereiten und/oder Warmhalten von Gargut, die Folgendes aufweist:
- eine Induktionsheizeinrichtung (10) zum Erzeugen eines magnetischen Wechselfeldes, und
- einen oder mehrere Garbehälter (14) zum Aufnehmen des Garguts, der bzw. die oberhalb der Induktionsheizeinrichtung (10) angeordnet oder anbringbar sind, wobei
- der Garbehälter (14) wenigstens ein Heizelement (16) aus einem ferromagnetischen Material aufweist, deren Curie-Temperatur an die Zubereitungs- oder Warmhaltetemperatur des Garguts angepasst ist,
- das Heizelement (16) eine Schicht aus einem ferromagnetischen Material und eine weitere Schicht aus einem wärmeleitenden Material aufweist,
- das Heizelement (16) im Boden des Garbehälters angeordnet und von einer Verkleidung umschlossen ist, und
- das Material der Verkleidung einen Schmelzpunkt und eine Temperaturbeständigkeit aufweist, die oberhalb der curie-Temperatur liegen,
**dadurch gekennzeichnet, dass**
- das Heizelement (16) eine weitere Schicht aus Edelstahl umfasst, die oberhalb der Schicht aus dem wärmeleitenden Material angeordnet ist,
- die Schicht aus dem wärmeleitenden Material oberhalb der Schicht aus dem ferromagnetischen Material angeordnet ist,
- die Schicht aus dem wärmeleitenden Material eine Dicke von wenigstens 0,5 mm aufweist,
- die Schicht aus dem ferromagnetischen Material eine Dicke von 0,3 mm bis 0,9 mm aufweist,
- der Garbehälter (14) aus einem thermoplastischen Material hergestellt ist und die maximale Curie-Temperatur des Heizelements (16) zwischen 30°C und 300°C beträgt, und
- zwischen dem ferromagnetischen Material und der Oberseite der Induktionsheizeinrichtung (10) eine Luftschicht (38) vorgesehen ist, die eine Dicke von 1 mm bis 3 mm aufweist.

2. Vorrichtung nach Anspruch 1,
**dadurch gekennzeichnet, dass** die Verkleidung aus Kunststoff hergestellt ist.

3. Vorrichtung nach Anspruch 1,
**dadurch gekennzeichnet, dass** die Verkleidung aus Silikon hergestellt ist.

4. Vorrichtung nach einem der vorhergehenden Ansprüche,
**dadurch gekennzeichnet, dass** die Verkleidung aus den Materialien Kunststoff, Silikon und/oder Holz zusammengesetzt ist.

5. Vorrichtung nach einem der vorhergehenden Ansprüche,
**dadurch gekennzeichnet, dass** die Induktionsheizeinrichtung (10) eine Abdeckung (30) aufweist, die einen Teil der Verkleidung bildet.

6. Vorrichtung nach Anspruch 5,
**dadurch gekennzeichnet, dass** die Abdeckung (30) aus Holz hergestellt.

7. Vorrichtung nach einem der vorhergehenden Ansprüche,
**dadurch gekennzeichnet, dass** die Schicht aus dem wärmeleitenden Material eine Dicke von 0,5 mm bis 11 mm aufweist.

8. Vorrichtung nach einem der vorhergehenden Ansprüche,
**dadurch gekennzeichnet, dass** der maximale Abstand zwischen dem ferromagnetischen Material und der Oberseite der Induktionsheizeinrichtung (10) zwischen 1 mm und 7 mm beträgt.

9. Vorrichtung nach einem der vorhergehenden Ansprüche,
**dadurch gekennzeichnet, dass** zwischen dem ferromagnetischen Material und der Oberseite der Induktionsheizeinrichtung (10) eine Isolierschicht aus Kunststoff vorsehen ist.

10. Vorrichtung nach Anspruch 9,
**Dadurch gekennzeichnet, dass** die Isolierschicht eine Dicke von 1 mm bis 7 mm aufweist.

11. Vorrichtung nach einem der vorhergehenden Ansprüche,
**dadurch gekennzeichnet, dass** die Luftschicht (38) mit einem Fasermaterial gefüllt ist.

12. Vorrichtung nach einem der vorhergehenden Ansprüche,
**dadurch gekennzeichnet, dass** die Luftschicht Abstandselemente (40) aus Silikon aufweist.

13. Vorrichtung nach einem der vorhergehenden Ansprüche,
**dadurch gekennzeichnet, dass** der Abstand zwischen einer Induktionsspule der Induktionsheizeinrichtung (10) und dem Heizelement (16) zwischen 5 mm und 15 mm beträgt.

14. Vorrichtung nach einem der vorhergehenden Ansprüche,
**dadurch gekennzeichnet, dass** die Vorrichtung wenigstens ein Oberteil (12) aufweist, das oberhalb der Induktionsheizeinrichtung (10) angebracht oder anbringbar ist.

15. Vorrichtung nach Anspruch 14,
**dadurch gekennzeichnet, dass** der bzw. die Garbehälter (14) innerhalb des Oberteils (12) eingesetzt oder einsetzbar sind.

16. Vorrichtung nach einem der vorhergehenden Ansprüche, **dadurch gekennzeichnet, dass** der bzw. die Garbehälter (14) wenigstens eine Identifizierungseinrichtung aufweisen, die von der Induktionsheizeinrichtung (10) erkennbar ist.

17. Vorrichtung nach Anspruch 16,
**dadurch gekennzeichnet, dass** die Identifizierungseinrichtung drahtlos mit der Induktionsheizeinrichtung (10) gekoppelt ist.

## Claims

1. Device for preparing and/or keeping warm cooked foods, having:
- an induction heating device (10) for generating an alternating magnetic field, and
- one or more cooking containers (14) for receiving the food that is to be or is cooked, which container(s) are arranged or can be installed above the induction heating device (10), wherein
- the cooking container (14) has at least one heating element (16) made of a ferromagnetic material, the Curie temperature of which is adapted to the preparation or keep-warm temperature of the food that is to be or is cooked,
- the heating element (16) has a layer of a ferromagnetic material and a further layer of a heat-conducting material,
- the heating element (16) is arranged in the base of the cooking container and is enclosed by a cladding, and
- the material of the cladding has a melting point and a temperature resistance above the Curie temperature,
**characterized in that**
- the heating element (16) comprises a further layer of stainless steel which is arranged above the layer of heat-conducting material,
- the layer of heat-conducting material is arranged above the layer of ferromagnetic material,
- the layer of heat-conducting material has a thickness of at least 0.5 mm,
- the layer of ferromagnetic material has a thickness of 0.3 mm to 0.9 mm,
- the cooking container (14) is made of a thermoplastic material and the maximum Curie temperature of the heating element (16) is between 30°C and 300°C, and
- an air layer (38) between 1 mm and 3 mm thick is provided between the ferromagnetic material and the upper surface of the induction heating device (10).

2. Device according to Claim 1,
**characterized in that**
the cladding is made of plastic.

3. Device according to Claim 1,
**characterized in that**
the cladding is made of silicone.

4. Device according to one of the preceding claims,
**characterized in that**
the cladding is composed of the materials plastic, silicone and/or wood.

5. Device according to one of the preceding claims,
**characterized in that**
the induction heating device (10) has a covering (30) which forms part of the cladding.

6. Device according to Claim 5,
**characterized in that**
the covering (30) is made of wood.

7. Device according to one of the preceding claims,
**characterized in that**
the layer of heat-conducting material is between 0.5 mm and 11 mm thick.

8. Device according to one of the preceding claims,
**characterized in that**
the maximum distance between the ferromagnetic material and the upper surface of the induction heating device (10) is between 1 mm and 7 mm.

9. Device according to one of the preceding claims,
**characterized in that**
an insulating layer of plastic is provided between the ferromagnetic material and the upper surface of the induction heating device (10).

10. Device according to Claim 9,
**characterized in that**
the insulating layer is between 1 mm and 7 mm thick.

11. Device according to one of the preceding claims,
**characterized in that**
the air layer (38) is filled with a fibre material.

12. Device according to one of the preceding claims,
**characterized in that**
the air layer has spacer elements (40) made of silicone.

13. Device according to one of the preceding claims,
**characterized in that**
the distance between an induction coil of the induction heating device (10) and the heating element (16) is between 5 mm and 15 mm.

14. Device according to one of the preceding claims,
**characterized in that**
the device has at least one upper part (12) which is or can be installed above the induction heating device (10).

15. Device according to Claim 14,
**characterized in that**
the cooking container(s) (14) is/are or can be placed within the upper part (12).

16. Device according to one of the preceding claims,
**characterized in that**
the cooking container(s) (14) has/have at least one identification device which can be recognized by the induction heating device (10).

17. Device according to Claim 16,
**characterized in that**
the identification device is coupled wirelessly to the induction heating device (10).

## Revendications

1. Ensemble pour préparer et/ou maintenir chaud un produit cuit, l'ensemble présentant ce qui suit :
un dispositif (10) de chauffage par induction qui produit un champ magnétique alternatif et
un ou plusieurs récipients de cuisson (14) qui reprennent le produit à cuire, placés ou aptes à être placés au-dessus du dispositif (10) de chauffage par induction,
le récipient (14) de cuisson présentant au moins un élément chauffant (16) en matériau ferromagnétique dont la température de Curie est adaptée à la température de préparation ou de maintien à chaud du produit à cuire,
l'élément chauffant (16) présentant une couche en matériau ferromagnétique et une autre couche en matériau conducteur de la chaleur,
l'élément chauffant (16) étant disposé dans le fond du récipient de cuisson et étant entouré par un habillage et
le matériau de l'habillage présentant une température de fusion et résistant à une température toutes deux supérieures à la température de curie, **caractérisé en ce que**
l'élément chauffant (16) comprend une autre couche en acier allié disposée au-dessus de la couche en matériau conducteur de la chaleur,
**en ce que** la couche en matériau conducteur de la chaleur est disposée au-dessus de la couche en matériau ferromagnétique,
**en ce que** la couche en matériau conducteur de la chaleur présente une épaisseur d'au moins 0,5 mm,
**en ce que** la couche en matériau ferromagnétique présente une épaisseur de 0,3 mm à 0,9 mm,
**en ce que** le récipient de cuisson (14) est réalisé en un matériau thermoplastique et la température maximale de curie de l'élément chauffant (16) est comprise entre 30°c et 300°C et
**en ce qu'**une couche d'air (38) présentant une épaisseur de 1 mm à 3 mm est prévue entre le matériau ferromagnétique et le côté supérieur du dispositif (10) de chauffage par induction.

2. Ensemble selon la revendication 1, **caractérisé en ce que** l'habillage est réalisé en matière synthétique.

3. Ensemble selon la revendication 1, **caractérisé en ce que** l'habillage est réalisé en silicone.

4. Ensemble selon l'une des revendications précédentes, **caractérisé en ce que** l'habillage est constitué de l'assemblage des matériaux matière synthétique, silicone et/ou bois.

5. Ensemble selon l'une des revendications précédentes, **caractérisé en ce que** le dispositif (10) de chauffage par induction présente un recouvrement (30) qui forme une partie de l'habillage.

6. Ensemble selon la revendication 5, **caractérisé en ce que** le recouvrement (30) est réalisé en bois.

7. Ensemble selon l'une des revendications précédentes, **caractérisé en ce que** la couche en matériau conducteur de la chaleur présente une épaisseur de 0,5 mm à 11 mm.

8. Ensemble selon l'une des revendications précédentes, **caractérisé en ce que** la distance maximale entre le matériau ferromagnétique et le côté supérieur du dispositif (10) de chauffage par induction est comprise entre 1 mm et 7 mm.

9. Ensemble selon l'une des revendications précédentes, **caractérisé en ce qu'**une couche isolante en matière synthétique est prévue entre le matériau ferromagnétique et le côté supérieur du dispositif (10) de chauffage par induction.

10. Ensemble selon la revendication 9, **caractérisé en ce que** la couche isolante présente une épaisseur comprise entre 1 mm et 7 mm.

11. Ensemble selon l'une des revendications précédentes, **caractérisé en ce que** la couche d'air (38) est remplie d'un matériau fibreux.

12. Ensemble selon l'une des revendications précédentes, **caractérisé en ce que** la couche d'air présente des éléments d'écartement (40) en silicone.

13. Ensemble selon l'une des revendications précédentes, **caractérisé en ce que** la distance entre une bobine d'induction du dispositif (10) de chauffage par induction et l'élément chauffant (16) est comprise entre 5 mm et 15 mm.

14. Ensemble selon l'une des revendications précédentes, **caractérisé en ce que** l'ensemble présente au moins une partie supérieure (12) disposée ou apte à être disposée au-dessus du dispositif (10) de chauffage par induction.

15. Ensemble selon la revendication 14, **caractérisé en ce que** le ou les récipients de cuisson (14) sont placés ou peuvent être placés à l'intérieur de la partie supérieure (12).

16. Ensemble selon l'une des revendications précédentes, **caractérisé en ce que** le ou les récipients de cuisson (14) présentent au moins un dispositif d'identification qui peut être reconnu par le dispositif (10) de chauffage par induction.

17. Ensemble selon la revendication 16, **caractérisé en ce que** le dispositif d'identification est raccordé sans fil au dispositif (10) de chauffage par induction.
